# EUROPEAN PATENT APPLICATION

(11) **EP 1 426 924 A1**
(43) Date of publication of application: **09.06.2004**
(21) Application number: 02360334.3
(22) Date of filing: 03.12.2002
(51) Int. Cl.: G10L 17/00, G10L 15/26

(54) **Speaker recognition for rejecting background speakers**

(71) Applicant: ALCATEL, 75008 Paris (FR)
(72) Inventor: Sienel, Jürgen, 71229 Leonberg (DE); Kopp, Dieter, 75428 Illingen (DE)
(74) Representative: KOHLER SCHMID + PARTNER

(57) **Abstract**

A method of rejecting a background speaker for speech controlling comprises the following steps:
a) evaluating speech by a speech recognition component (3)
b) evaluating speech by a speaker verification component (4)
c) Using a term recognized by the speech recognition component (3) for speech controlling only if the speaker verification confirms the right speaker, wherein the speech recognition and the speaker verification are performed in succession or simultaneously.

This method enables rejection of background speakers.

## Description

### Background of the invention

The invention relates to a method of rejecting a background speaker for speech controlling.

Depending on the terminal, applications which can be operated by means of speech control may have to be operated in a hands-free mode. For example, this may be the case in a car. The terminal must only react to the user of the system and not to a background speaker.

To this end a plurality of microphones, i.e. a microphone array, could be used. The correct speaker could be verified by evaluating the delay times of the microphones. However, distant microphones cannot be integrated in mobile terminals.

Alternatively, methods of noise reduction can be used for eliminating noise signals from the recorded speech signal. These methods can also be used for rejecting background speakers if the background noise level is almost constant (cocktail party effect). However, these methods do not work with individual, short time statements by background speakers, which cannot be eliminated using the known methods.

### Object of the invention

It is the object of the invention to provide a method which is more reliable and easier to implement for rejecting background speakers.

### Short description of the invention

This object is achieved by a method of rejecting a background speaker for speech controlling comprising the steps:
a) evaluating speech by a speech recognition component
b) evaluating speech by a speaker verification component
c) Using a term recognized by the speech recognition component for speech controlling only if the speaker verification confirms the right speaker, wherein the speech recognition and the speaker verification are performed in succession or simultaneously.

In the method according to the invention speech recognition and speaker verification are combined, such that the acoustic or speech signal is evaluated in both components. If a term is recognized by the speech recognition component independent of the speaker, it is only used for speech controlling, if additionally the speaker is verified by the speaker verification component as the present user or the owner of the speech controlling system. The recognized term is not used for speech controlling, if the correct speaker is not verified by the speech verification component. The term is then assumed to be from a background speaker and is consequently rejected. By combining speech recognition and speaker verification for speech controlling, the measure of confidence is increased, that execution of a command is intended by the user of the speech controlling. Depending on the software or hardware in which the inventive method is implemented, the speech recognition and speaker verification can be performed simultaneously or successively. It is particularly advantageous that speaker verification can be performed with similar methods as speech recognition. Thus, some computations can be used for both and it is also possible to share databases, where voice patterns can be stored. Methods of speech recognition can either depend on a specific text or can be used for arbitrary texts. Speech recognition and speaker verification can either use the same voice patterns or different voice patterns. A measure of confidence can be assigned to the result of the speech recognition, which is combined with the result of the speaker verification, meaning that the speaker verification can be neglected if a high measure of confidence is reached for the speech recognition.

In a preferred variant of the inventive method a voice pattern for speaker verification and/or speech recognition is based on at least one of the following: Phoneme, word patterns, phrase patterns, fundamental frequency, speech speed, and/or typical vowel time. An acoustic unit is assigned to a voice pattern, i.e. a reference pattern, which corresponds to text. The text can be a word, phrase, or sentence. If an acoustic signal, i.e. speech, is received by the terminal, matching of the voice patterns with the received signals is performed. The voice patterns can, p. ex. be based on phonemes, where a phoneme is the smallest vocal unit, words or phrases.

In a particularly preferred variant of the inventive method the voice patterns are generated and stored before use. If the voice patterns are generated by the user before use, a particularly good speaker verification or authentication and speech recognition can be obtained because the voice patterns have been trained by the user. Alternatively, the voice pattern and speech pattern could be generated by the supplier or manufacturer. In this case, the user can start using the method or a terminal applying the inventive method right away. It is not necessary for the user to generate a vocabulary and the associated voice patterns for the speech recognition. For the speaker verification the user can train the system using e.g. a phonetically rich sentence or the influence of the speaker recognition will increase over time, when the speaker verification patterns extracted from the speech signals become more reliable. Furthermore, the voice patterns can be generated (and adapted) during use of the inventive method or of a terminal in which the inventive method is implemented.

The speech recognition may be either speaker dependent with a fixed or extensible vocabulary or speaker independent recognition which fixed or a dynamic vocabulary. Furthermore starting with speaker independent recognition with a subsequent adaption to the user is possible.

It is particularly advantageous if the voice patterns, in particular for speaker verification, are adapted during use. If the vocabulary and the voice patterns are supplied, the speaker verification need only be adapted to a particular user. It is not necessary to create the vocabulary and the voice patterns. This variant of the method facilitates use of the method with the same terminal by different users with different accents, dialects or pronunciation. The voice patterns can be adapted for each user and stored separately. The terminal can be told which user uses the terminal and hence which adaptation to use for speaker verification. Speech recognition can work speaker independent (without adaption).

In this context it is particularly useful if the influence of the speaker verification increases with the number of interactions. The more interactions there are, the better adapted the voice patterns are. Hence, the probability that a false term is recognized by the speech recognition component decreases. At the same time the probability that the right speaker is verified by the speaker verification component increases. If there is a high probability of verifying the right speaker and rejecting a background speaker, a high influence of the speaker verification greatly increases the reliability of the inventive method.

The idea of the invention is also realized in a computer program adapted to perform the inventive method. If the operations of speech recognition and speaker verification are implemented in a computer program, the method can be performed by a computer based control unit, which can be integrated into (mobile) terminals. The inventive method can be automated in the simplest way by loading the inventive computer program into the computer based control unit and executing the loaded program.

Also in accordance with the invention is a terminal comprising a speech recognition component, a speaker verification unit and means for processing a recognised term. The inventive method is preferably implemented in the terminal in such a way that it can be performed in an automated way.

In a preferred embodiment the terminal comprises a microphone and means for converting acoustic signals into text. Acoustic signals are received by the microphone. In the means for converting acoustic signals into text, voice patterns are compared with the acoustic signals. If there is a match between acoustic signal and voice pattern, the term associated with the voice pattern is delivered as text.

If the terminal comprises storage means for storing voice patterns, speech recognition and speaker verification can be performed in real time since there is easy and quick access to the voice patterns.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.

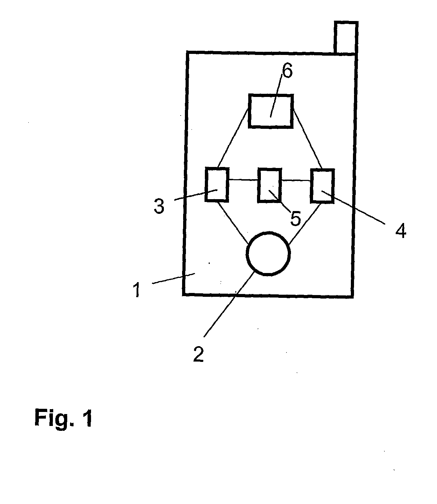

- Fig. 1: shows a schematic representation of a terminal according to the invention;

In the figure a terminal 1 is designed as mobile terminal, in particular as mobile phone. The terminal 1 comprises a microphone 2 to receive acoustic signals, for example from a user of the terminal 1. The microphone 2 is connected to a speech recognition component 3 and a speaker verification component 4. Both, the speech recognition component 3 and the speaker verification component 4 are connected to a storage means 5, where voice patterns are stored. By means of the voice patterns the acoustic signals are analyzed in the speech recognition component 3 and the speaker verification component 5. If a term (word, phrase or sentence) is recognized by the speech recognition component 3, the term is transferred to the speech controlling unit 6. If the speaker verification component 5 verifies the right user, this information is transferred to the speech controlling unit 6. A command associated with the recognized term is executed by the speech controlling unit 6 only if the speaker verification component 4 confirms that the term recognized by the speech recognition component 3 originates from the right user, i.e. the user supposed to use the terminal 1 and not a background speaker.

## Claims

1. Method of rejecting a background speaker for speech controlling comprising the steps:
a) evaluating speech by a speech recognition component (3)
b) evaluating speech by a speaker verification component (4)
c) Using a term recognized by the speech recognition component (3) for speech controlling only if the speaker verification confirms the right speaker, wherein the speech recognition and the speaker verification are performed in succession or simultaneously.

2. Method according to claim 1, **characterized in that** a voice pattern for speaker verification and/or speech recognition is based on at least one of the following:
Phoneme, word patterns, phrase patterns, fundamental frequency, speech speed, and/or typical vowel time.

3. Method according to claim 1 **characterized in that** the voice patterns are generated and stored before use.

4. Method according to claim 1, **characterized in that** the voice patterns are generated during use.

5. Method according to claim 1, **characterized in that** the voice patterns are adapted during use.

6. Method according to claim 1, **characterized in that** the influence of the speaker verification increases with the number of interactions.

7. Computer program adapted to perform the method according to claim 1.

8. Terminal (1) comprising a speech recognition component (3), a speaker verification component (4) and means for processing a recognized term.

9. Terminal according to claim 8, **characterized in that** the terminal (1) comprises a microphone.(2).

10. Terminal according to claim 8, **characterized in that** the terminal (1) comprises storage means (5) for storing voice patterns.
